# EUROPEAN PATENT SPECIFICATION

(11) **EP 4 378 561 B1**
(45) Date of publication and mention of the grant of the patent: **04.06.2025**
(21) Application number: 23211469.4
(22) Date of filing: 22.11.2023
(51) Int. Cl.: B01D 46/00, B01D 46/64

(54) **AIR FILTERING DEVICE**
LUFTFILTERVORRICHTUNG
DISPOSITIF DE FILTRATION D'AIR

(30) Priority: 29.11.2022 SE 2251389
(43) Date of publication of application: 05.06.2024
(73) Proprietor: Absolent AB, 531 40 Lidköping (SE)
(72) Inventor: BLOMQVIST, Holger, 543 34 Tibro (SE); SVANSTRÖM, Joel, 541 96 Väring (SE); MATTSSON, Johan, 530 30 Tun (SE); ÅRLID, Christian, 531 52 Lidköping (SE)
(74) Representative: Zacco Sweden AB

(56) References cited:
- WO-A1-2004/014521
- AT-A4- 524 869
- US-A- 5 833 727

## Description

### TECHNICAL FIELD

This invention relates to an air filtering device. In particular, the invention relates to a modular air filtering device comprising at least a first and a second housing module arranged next to each other so that air flows through the first housing module before flowing through the second housing module during operation of the device.

### BACKGROUND OF THE INVENTION

Air filtering devices may be used to clean air in e.g. manufacturing industry facilities where the air has been contaminated with various liquid or solid particles. Such devices typically include a fan for forcing a flow of air through one or more filters arranged in the device. Type and concentration of contaminants typically vary depending on the type of industry, and the volume rate of the air to be purified may vary considerably. Thus, the filtering requirements may vary considerably, which is often a challenge since an air filtering device should normally be adapted to its intended application.

One way of providing for such adaptation is to give the air filtering device a modular structure so that different modules can be assembled depending on the purpose, and sometimes also depending on the space available at the intended location.

A challenge associated with modular air filtering devices is to provide a module connection system that allows for a proper sealing between the modules and that also allows for a quick and cost-efficient assembling of the modules. A further challenge is to provide for a cost-efficient production method for the individual modules.

WO2004/014521 discloses a modular air filtering device. Although the device of WO2004/014521 may be suitable in various application it does not provide for a very efficient assembling procedure.

There is a need for improvements in the field of modular air filtering devices.

### SUMMARY OF THE INVENTION

The invention concerns an air filtering device comprising: a device housing provided with an air inlet and an air outlet so that air flows from the inlet through the device housing and further to the outlet during operation of the air filtering device; wherein the device housing comprises at least a first and a second housing module arranged next to each other so that air flows through the first housing module before flowing through the second housing module during operation of the device, wherein at least one of the first and second housing modules is configured to be provided with an air filter, wherein the first and second housing modules are connected via a first flange and a second flange, wherein the first flange is arranged on the first housing module and facing the second housing module, wherein the second flange arranged on the second housing module and facing the first housing module, wherein a compressible gasket is arranged between the first and second flanges, wherein the air filtering device further comprises an interlocking arrangement configured to interlock the first and second housing modules and to force the first and second flanges towards each other so as to compress the gasket and form a proper seal when the first and second housing modules are interlocked.

Further, the interlocking arrangement comprises a bracket that is connected to both the first and second housing modules by means of at least a first screw, wherein a first threaded screw hole for receiving the first screw is arranged in the first or second housing module, wherein the first threaded screw hole is accessible from an outside of the air filtering device and extends in a direction substantially parallel with a plane in which the first or the second flange is located, wherein a first conical guide surface is arranged around the first screw hole and wherein the first screw is provided with a corresponding second conical guide surface so that, when the first screw is fastened to the first screw hole and tightened therein, the first and second conical guide surfaces interact and force the first and second housing modules, and thus also the first and second flanges, towards each other.

In short, when tightening the first screw, the bracket that connects the first and second housing modules is fastened while the two modules at the same time are forced together due to the interaction of the guide surfaces. The first screw may be sufficiently tightened when a portion of one flange comes in contact with a mating surface of the other flange. At the same time, the bracket is fastened and the gasket is compressed. This is an efficient assembly process. In addition, the first screw is accessible from the outside of the air filtering device, which simplifies assembly and disassembly.

The bracket can be provided with an opening of various type for allowing a threaded part of the first screw to pass through, and the first conical guiding surface may be arranged in the bracket around the opening. The bracket opening may be elongated to allow aligning of the first screw and the first screw hole also before final compression of the gasket and thus before the two modules are forced together into their final relative position. This means that the first screw can easily be partly tightened in the first screw hole as an initial measure and that all forcing together of the two modules will take place when tightening the first screw further.

Typically, the bracket forms a separate component that is attached to the air filtering device by means of first and second screws and corresponding first and second screw holes, one screw hole arranged in the first housing module and the other in the second housing module. Both screws, screw holes, guiding surfaces etc. are preferably arranged in the same way as described above for the first screw.

The air filtering device may form a vertical arrangement with a plurality of housing modules arranged on top of each other with the air inlet arranged in a bottom module and the air outlet arranged in a top module. The main direction of the air flow in such a device is thus vertically upwards. A fan as well as various electronic equipment including control circuitry is typically arranged in the top module. One or more housing modules provided with air filters may be arranged between the bottom and top modules. In a typical example there are three housing modules provided with one filter each, where a coarse filter is arranged in the lowest filter housing module, an intermediate filter in the middle filter housing module, and fine filter in the upper filter housing module. Each module typically has four side walls (where one or more of the walls may be a door or include a door and a wall frame) and open top and bottom sides so as to form a "box" (cube, square cuboid or rectangular cuboid) with open top and bottom.

A housing module according to this disclosure may be produced in an efficient way by stamping and bending a first and a second steel plate into structures having an L-shaped cross section and then connecting the stamped and bent plates so as to form a rectangular module. The first plate may be treated (stamped, bent, etc.) so as to form a right wall and a rear wall with corresponding upper and lower flanges extending along the walls. The second plate may in turn be treated so as to form a left wall and a front wall with corresponding upper and lower flanges extending along the walls. An opening may have been provided in the front wall to allow access to the inside of the module when a door arranged at the front wall is opened. When the two L-shaped plates are properly connected, a housing module with four walls is provided. The plates may also be treated so as to exhibit chamfered corners between the walls (i.e. the first plate may be provided with a chamfered corner between the right and rear walls and a further chamfered corner for connection to the second plate, and the second plate may be provided with a chamfered corner between the left and front walls and a further chamfered corner for connection to the first plate).

In an embodiment, the first threaded screw hole comprises an internally threaded element arranged on an inside of the first or second housing module. As an example, a hole may be made in the wall of the module and a blind rivet nut may be fixed at the hole at the inside of the wall. The hole and the nut may have corresponding hexagonal shapes to prevent rotation of a nut arranged in the hole. Various other fixation techniques for the internally threaded element are also possible, such as welding.

In an embodiment, the bracket is connected to the first and second housing modules by means of the first screw and a second screw, wherein the first threaded screw hole for receiving the first screw is arranged in one of the first or second housing module, and wherein a second threaded screw hole for receiving the second screw is arranged in the other of the first or second housing module.

Although the bracket may be connected to one of the housing modules by other means than a (second) screw, it is suitable to let the bracket form a separate component attachable to the first and second modules by means of two screws, one screw for each module.

The second screw and screw hole may be arranged in the same way as the first screw and screw hole, i.e. the second threaded screw hole may also be accessible from the outside of the air filtering device and extend in a direction substantially parallel with the plane in which the first or the second flange is located. Further, first and second conical guide surfaces may be arranged in the same way so that when either of the first or the second screw is fastened to the corresponding screw hole and tightened therein, the first and second conical guide surfaces interact and force the first and second housing modules, and thus also the first and second flanges, towards each other. The two screws thus cooperate.

In an embodiment, the bracket is provided with a hinge fitting for holding a door of the housing module. The door forms a wall of the housing module when closed. It may be sufficient if only the brackets arranged on, for instance, the left side of the front side is provided with hinge fittings. However, all brackets may have the same structure.

In an embodiment, each of the first and second housing modules has a generally rectangular cross section with four side walls and four corners. Typically, one of the side walls forms or includes a door that can be opened to allow access to an inside of the housing module.

In an embodiment, the corners are chamfered so as to exhibit corner surfaces facing in a direction in between that of adjacent housing module walls. Typically, the adjacent side walls are orthogonal to each other and the corner surface exhibiting an angle of 45° to the adjacent walls. The chamfered corners provide a space along the corners of the device housing also when the filtering device is arranged close to a wall or close to one or more further air filtering devices. The corner space provided is useful for arranging hinges, cables, nipples or other components in such a way that they do not protrude sideways from the housing, i.e. these components can be arranged without interfering physically with an adjacent wall or air filter device.

In an embodiment, the interlocking arrangement comprises four brackets arranged in association with a corresponding corner.

In an embodiment, the bracket is arranged on one of said corner surfaces.

In an embodiment, at least one of the first and second flanges is provided with a recessed portion and a non-recessed portion, each of which extending along the at least one flange, wherein, when the first and second housing modules are interlocked, a surface of the non-recessed portion is in contact with a mating surface of the other flange while the recessed portion forms at least a part of a sealing space that extends along and between the first and second flanges, and wherein the gasket is arranged in the sealing space and is compressed between a surface of the recessed portion and a surface of the other flange on an opposite side of the sealing space when the first and second housing modules are interlocked.

Besides that the gasket is properly held in place when arranged in the sealing space/recessed portion, the above design provides for an easy, quick and appropriate compression of the gasket. That the gasket is compressed in the sealing space when the first and second housing modules are interlocked means implicitly that the thickness of the gasket when uncompressed is greater than the height/thickness of the sealing space. Moreover, the non-recessed portion of the flange sets a minimum height/thickness for the sealing space (as the non-recessed portion comes into contact with the mating surface of the other flange), which means that it also sets a minimum thickness for the compressed gasket, which in turn means it also sets a limit for the compression. This is useful since compressing a gasket too much often leads to poor sealing. A gasket with suitable thickness and compression properties can be selected depending on the exact height/thickness of the sealing space. All in all, an air filtering device according to above provides for a quick assembly and a proper sealing since once a suitable gasket has been selected, there is no need to fine-tune the interlocking arrangement; when the screws are tightened the gasket will be suitably compressed.

One of the first and second flanges may be a flat flange. If the air filtering device is a vertical device with the second housing module arranged on top of the first housing module, it is preferably arranged so that the first housing module is provided with the special flange with the recessed portion onto which the gasket can be placed. Alternatively, both flanges may be provided with a recessed portion so that these two recessed portions together form the sealing space. An advantage of providing both flanges with recessed and non-recessed portions is that the flange becomes more rigid and steady; a flat plate is more flexible and might be bent.

In an embodiment, the sealing space has a height corresponding to a distance between a surface of the recessed portion and a surface of the other flange on an opposite side of the sealing space, wherein the height of the sealing space is related to a thickness of the gasket such that the height of the sealing space is less than a thickness of the gasket when the gasket is not compressed.

As an example, the height of the sealing space may be 3 mm while the thickness of the gasket when uncompressed may be 5 or 6 mm. The gasket may be made of various types of elastomers. Also various shapes of the gasket are possible, its cross section may be e.g. rectangular or circular. Further, the gasket may be extruded.

In an embodiment, the height of the sealing space is greater than or equal to a minimum allowed compressed thickness of the gasket. For instance, a typical gasket made of an elastomer material and having an uncompressed thickness of 5 mm may have a minimum allowed compressed thickness of 2 mm. A suitable height of the sealing space for such a gasket may then be e.g. 3 mm.

In an embodiment, each of the first and second flanges is provided with a recessed portion and a non-recessed portion, wherein the first and second flanges are arranged so that the two non-recessed portions form mating surfaces in contact with each other and so that the two recessed portions together form the sealing space.

### BRIEF DESCRIPTION OF DRAWINGS

In the description of the invention given below reference is made to the following figure, in which:
Figure 1 shows an example of an air filtering device according to this disclosure.
Figure 2 shows the air filtering device of figure 1 with front doors/wall opened.
Figure 3 shows two adjacent housing modules forming part of the air filter device of figure 1.
Figure 4 shows a top view of one of the housing modules of figure 3.
Figure 5 shows a sectional view of a flange connection between the housing modules of figure 3.
Figure 6 shows the housing modules of figure 3 connected to each other and magnified part of a bracket used for connection.
Figure 7 shows a sectional view of the housing modules of figure 3 while being connected to each other.
Figure 8 shows a sectional view corresponding to figure 7 but when the housing modules have been fully connected to each other.
Figure 9 shows a sectional view according to figure 7 but with the section taken at a slightly different position.
Figure 10 shows a sectional view according to figure 8 but with the section taken at a slightly different position.

### DESCRIPTION OF EXAMPLE EMBODIMENTS OF THE INVENTION

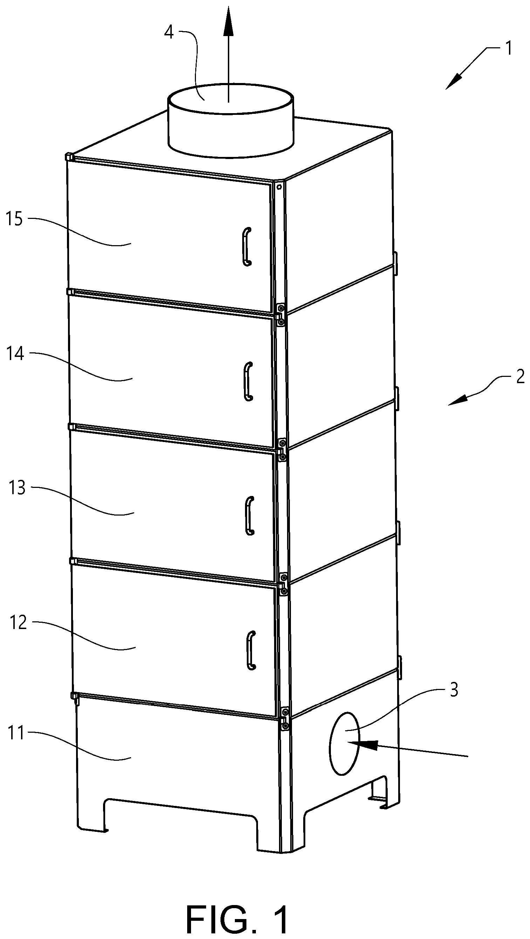

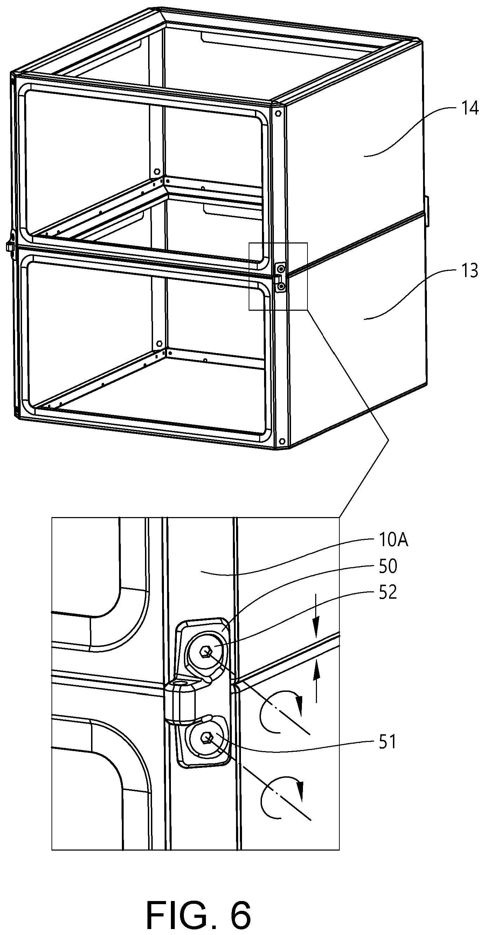

An example of an air filtering device 1 according to this disclosure is shown in figures 1-8. As shown in figure 1, the air filtering device 1 comprises a device housing 2 provided with an air inlet 3 and an air outlet 4 so that air flows from the inlet 3 through the device housing 2 and further to the outlet 4 during operation of the air filtering device 1. The device housing 2 comprises in this example five housing modules 11, 12, 13, 14, 15 arranged on top of each other so that air flows through a lower (upstream) housing module before flowing through the next housing module during operation of the device 1.

The air inlet 3 is arranged in a bottom module 11 and the air outlet 4 is arranged in a top module 15. The top module 15 is also provided with a fan (not shown) arranged to generate the air flow through the device housing 2 and it is further provided with various electronic components for driving and controlling the fan.

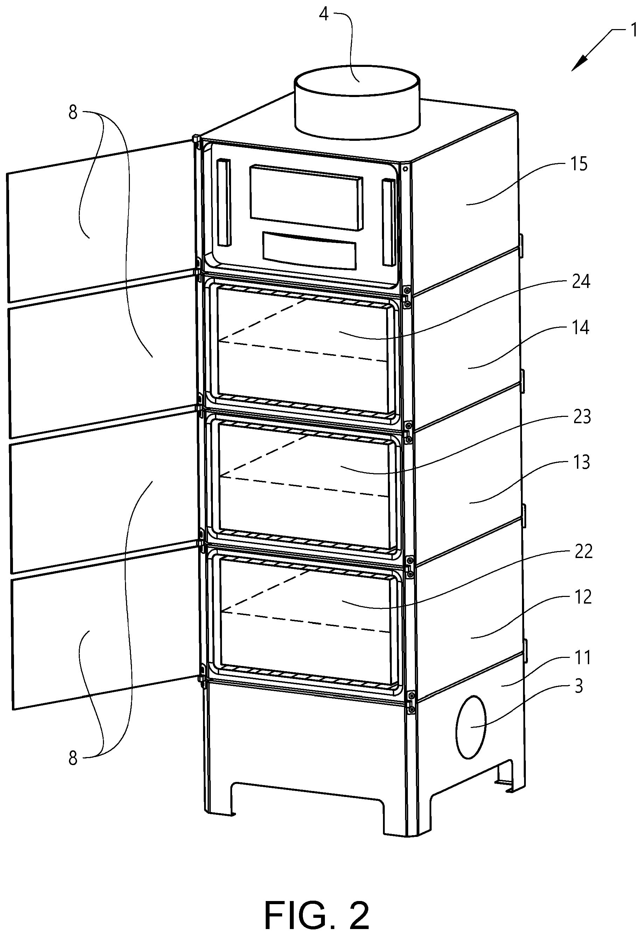

Each of the three housing modules 12, 13, 14 between the bottom and top modules 11, 15 is provided with a corresponding air filter 22, 23, 24, see figure 2.

As shown in e.g. figures 1-3, all housing modules 11-15 are delimited by side walls 9 and, apart from the bottom module 11, the remaining housing modules 12-15 are provided with a front wall in the form of a door 8 allowing access to the inside of the corresponding module (for e.g. inspection or exchange of air filters or for checking or controlling the fan or the electronic components in the top module 15).

The walls 8, 9 are connected at corners 10. The corners 10 are chamfered so as to exhibit corner surfaces 10A facing in a direction in between that of adjacent housing module walls 8, 9.

All housing modules 11-15 are in this case connected to each other in a similar way. The details of the connection is described below using air filter housing modules 13 and 14 as an example where module 13 is denoted "first housing module" and module 14 is denoted "second housing module".

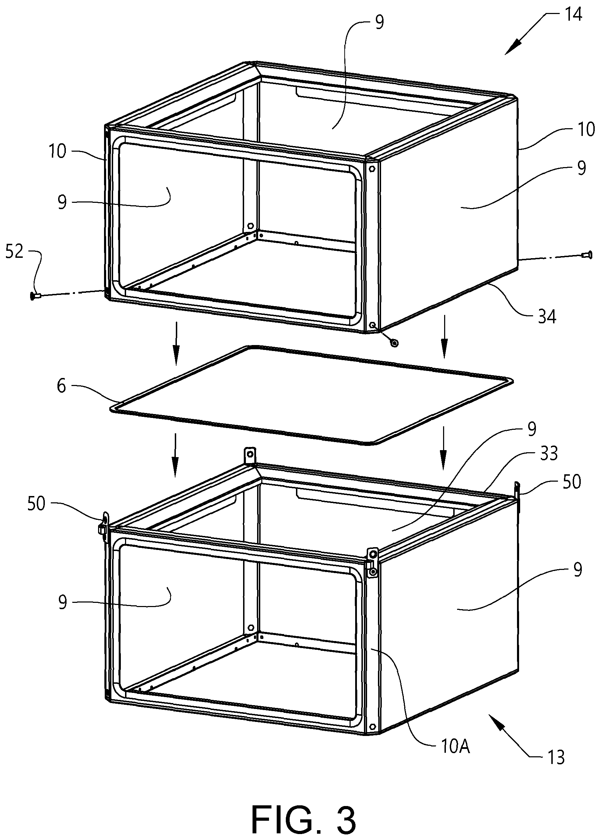

Figures 3-8 show that the "first" and "second" housing modules 13, 14 are connected via a first flange 33 and a second flange 34, wherein the first flange 33 is arranged on the first housing module 13 and facing the second housing module 14 and wherein the second flange 34 is arranged on the second housing module 34 and facing the first housing module 13. A compressible gasket 6 is arranged between the first and second flanges 13, 14.

As will be described more in detail below, the air filtering device 1 further comprises an interlocking arrangement 50, 51, 52, 53, 54, 61, 62 configured to interlock the first and second housing modules 13, 14 and to force the first and second flanges 33, 34 towards each other so as to compress the gasket 6 and form a proper seal when the first and second housing modules 13, 14 are interlocked.

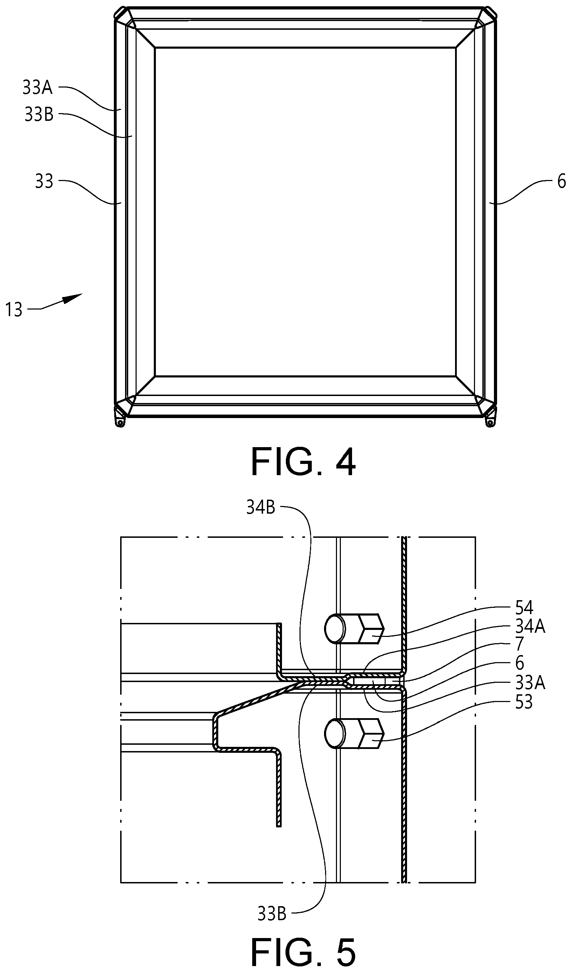

As shown in figures 5, 7 and 8, each of the first and second flanges 33, 34 is in this case provided with a recessed portion 33A, 34A and a non-recessed portion 33B, 34B, each of which extending along the at least one flange 33, 34. The first flange 33 is in this case facing upwards and the recessed portion 33A is thus located at a lower vertical level than the non-recessed portion 33B. Similarly, but conversely, the second flange 34 is in this case facing downwards and the recessed portion 34A is thus located at a higher vertical level than the non-recessed portion 34B.

When the first and second housing modules 13, 14 are interlocked, a surface of the non-recessed portion 33B of the first flange 33 is in contact with a mating surface of the second flange 34. The mating surface is in this case the non-recessed portion 34B of the second flange 34. On the other hand, the recessed portions 33A, 34A of the two flanges 33, 34 are not in contact and form instead together a sealing space 7 that extends along and between the first and second flanges 33, 34.

The gasket 6 is arranged in the sealing space 7 and is compressed between the surface of the recessed portion 33A of the first flange and a surface of the recessed portion 34A of the second flange 34A located on an opposite side of the sealing space 7 when the first and second housing modules 13, 14 are interlocked.

The sealing space 7 has a height corresponding to a distance between the surfaces of the two recessed portion 33A, 34A when the two mating surfaces, i.e. the two non-recessed portion 33B, 34B, are in contact with each other. The height of the sealing space 7 is less than a thickness of the gasket 6 when the gasket 6 is not compressed. Therefore the gasket 6 becomes compressed when the first and second housing modules 13, 14 are interlocked. Further, the height of the sealing space 7 is greater than a minimum allowed compressed thickness of the gasket 6. This prevents that the gasket 6 is compressed too much, which may lead to poor sealing properties.

For example, if the flanges 33, 34 are designed to form a sealing space 7 having a height of 3 mm, it may be useful to use a gasket 6 having an uncompressed thickness of 5-6 mm and a minimum allowed compressed thickness of <3 mm, such as 2 mm.

The sealing space 7 has a width larger than a width of the gasket 6 so as to allow the gasket 6 to expand sideways when compressed.

Details of the interlocking arrangement between air filter housing modules 13 and 14, i.e. the "first" and the "second" housing module, are shown in figures 5-8. The interlocking arrangement comprises four brackets 50 arranged at each of the four corners 10. Each bracket 50 is connected to both the first and second housing modules 13, 14 by means of first and second screws 51, 52 threaded into first and second threaded screw holes 53, 54 arranged on an inside of the corresponding housing module 13, 14. The bracket 50 is provided with two holes for allowing passage of the threaded part of the screws. In this example, a hole is provided in the wall of the module, or rather in the corner surface 10A thereof, and a blind rivet nut is fixed to the inside of the wall/corner surface at the hole. The blind rivet nut thus forms the threaded screw hole.

The threaded screw holes 53, 54 are thus accessible from an outside of the air filtering device 1 and they extend in a direction substantially parallel with a plane in which the first or the second flange 33, 34 is located. This direction is horizontal in the example described here.

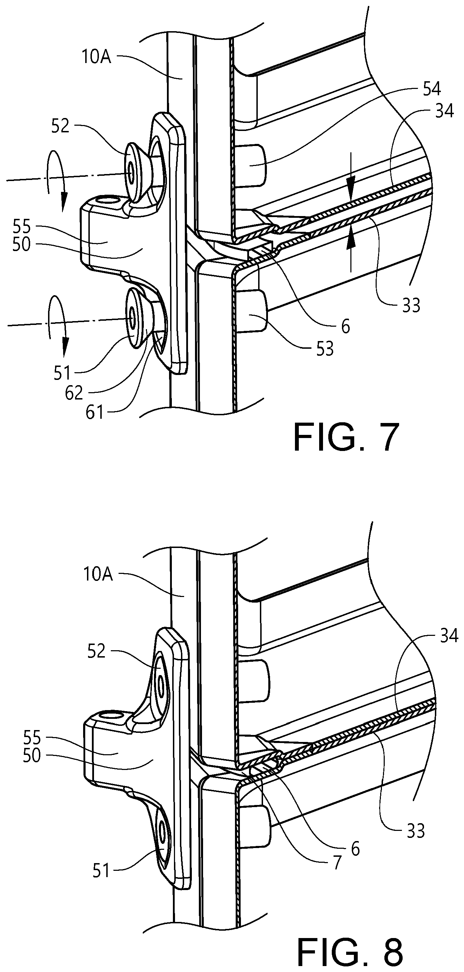

A first conical guide surface 61 is arranged around each of the screw holes 53, 54, see figure 7. The first conical guide surface 61 is arranged in the bracket 50 around the through-hole for the threaded part of the screw. Each of the screws 51, 52 is provided with a corresponding second conical guide surface 62. That is, the first and second guide surfaces 61, 62 are configured to interact with each other. When the first or second screw 51, 52 is fastened to its corresponding screw hole 53, 54 and tightened therein, the first and second conical guide surfaces 61, 62 of the bracket 50 and screw 51, 52, respectively, interact and force the first and second housing modules 13, 14, and thus also the first and second flanges 33, 34, towards each other. This process is illustrated in figures 7 and 8.

Figure 7 shows further that the bracket 50 may be provided with a hinge fitting 55 for holding the door 8 of the housing module 12, 13, 14, 15.

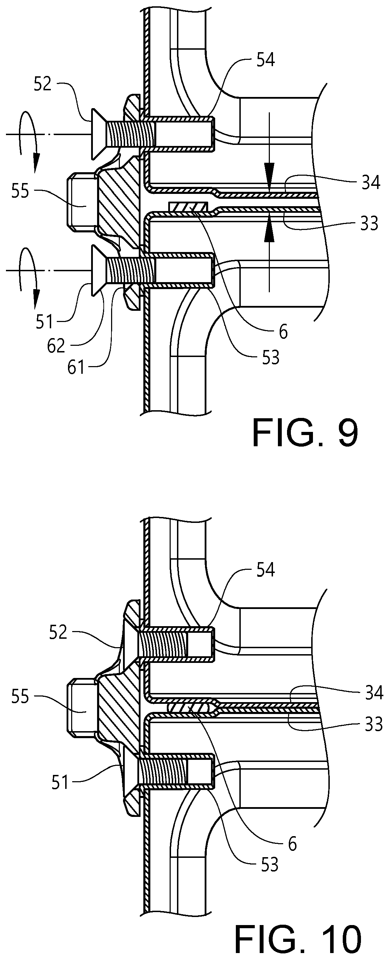

Figures 9 and 10 show sectional views according to figures 7 and 8, respectively, but with the section taken at a slightly different position. In figures 9 and 10 the section is taken at the position of the first and second screws 51, 52 so as to more clearly show, for instance, the first and second conical guide surfaces 61, 62.

The housing modules 11, 12, 13, 14, 15 have a square cross section in the horizontal plane and since flanges, sides, corners, etc., are similar in all directions, a certain housing module may be rotated 90°, 180° or 270° in relation to an adjacent housing module but still allow for module interlocking.

The invention is not limited by the embodiments described above but can be modified in various ways within the scope of the claims. For instance, it is not necessary that recessed portions are arranged in both flanges to be connected; the sealing space may be provided by only one of the flanges. Further, the number of housing modules and the content therein may be different than exemplified above. Also the interlocking arrangement may be designed in another way. For instance, the bracket may be fixed to one of the housing modules by other means than by a screw so that only one screw is used at each bracket.

## Claims

1. An air filtering device (1) comprising:
a device housing (2) provided with an air inlet (3) and an air outlet (4) so that air flows from the inlet (3) through the device housing (2) and further to the outlet (4) during operation of the air filtering device (1);
wherein the device housing (2) comprises at least a first and a second housing module (13, 14) arranged next to each other so that air flows through the first housing module (13) before flowing through the second housing module (14) during operation of the device (1),
wherein at least one of the first and second housing modules (13, 14) is configured to be provided with an air filter (23, 24),
wherein the first and second housing modules (13, 14) are connected via a first flange (33) and a second flange (34),
wherein the first flange (33) is arranged on the first housing module (13) and facing the second housing module (14),
wherein the second flange (34) is arranged on the second housing module (34) and facing the first housing module (13),
wherein a compressible gasket (6) is arranged between the first and second flanges (13, 14) ,
wherein the air filtering device (1) further comprises an interlocking arrangement (50, 51, 52, 53, 54, 61, 62) configured to interlock the first and second housing modules (13, 14) and to force the first and second flanges (33, 34) towards each other so as to compress the gasket (6) and form a proper seal when the first and second housing modules (13, 14) are interlocked,
**characterized in**
**that** the interlocking arrangement comprises a bracket (50) that is connected to both the first and second housing modules (13, 14) by means of at least a first screw (51),
wherein a first threaded screw hole (53) for receiving the first screw (51) is arranged in the first or second housing module (13),
wherein the first threaded screw hole (53) is accessible from an outside of the air filtering device (1) and extends in a direction substantially parallel with a plane in which the first or the second flange (33, 34) is located,
wherein a first conical guide surface (61) is arranged around the first screw hole (53) and wherein the first screw (51) is provided with a corresponding second conical guide surface (62) so that, when the first screw (51) is fastened to the first screw hole (53) and tightened therein, the first and second conical guide surfaces (61, 62) interact and force the first and second housing modules (13, 14), and thus also the first and second flanges (33, 34), towards each other,
wherein the bracket (50) is provided with an opening for allowing a threaded part of the first screw (51) to pass through, and wherein the first conical guide surface (61) is arranged in the bracket (50) around the opening.

2. The air filtering device (1) according to claim 1, wherein the first threaded screw hole (53) comprises an internally threaded element arranged on an inside of the first or second housing module (13, 14).

3. The air filtering device according to claim 1 or 2, wherein the bracket (50) is connected to the first and second housing modules (13, 14) by means of the first screw (51) and a second screw (52),
wherein the first threaded screw hole (53) for receiving the first screw (51) is arranged in one of the first or second housing module (13),
wherein a second threaded screw hole (54) for receiving the second screw (52) is arranged in the other of the first or second housing module (14).

4. The air filtering device (1) according to any of claims 1-3, wherein the bracket (50) is provided with a hinge fitting (55) for holding a door (8) of the housing module (13, 14).

5. The air filtering device (1) according to any of the above claims, wherein each of the first and second housing modules (13, 14) has a generally rectangular cross section with four side walls (8, 9) and four corners (10).

6. The air filtering device (1) according to claim 5, wherein the corners (10) are chamfered so as to exhibit corner surfaces (10A) facing in a direction in between that of adjacent housing module walls (8, 9).

7. The air filtering device (1) according to claim 5 or 6, wherein the interlocking arrangement comprises four brackets (50) arranged in association with a corresponding corner (10).

8. The air filtering device (1) according to claim 6, wherein the bracket (50) is arranged on one of said corner surfaces (10A).

9. The air filtering device (1) according to any of the above claims,
wherein at least one of the first and second flanges (33, 34) is provided with a recessed portion (33A, 34A) and a non-recessed portion (33B, 34B), each of which extending along the at least one flange (33, 34),
wherein, when the first and second housing modules (13, 14) are interlocked, a surface of the non-recessed portion (33B) is in contact with a mating surface of the other flange (34B) while the recessed portion (33A, 34A) forms at least a part of a sealing space (7) that extends along and between the first and second flanges (33, 34),
wherein the gasket (6) is arranged in the sealing space (7) and is compressed between a surface of the recessed portion (33A) and a surface of the other flange (34A) on an opposite side of the sealing space (7) when the first and second housing modules (13, 14) are interlocked.

10. The air filtering device (1) according to claim 9, wherein the sealing space (7) has a height corresponding to a distance between a surface of the recessed portion (33A) and a surface of the other flange (34A) on an opposite side of the sealing space (7), wherein the height of the sealing space (7) is related to a thickness of the gasket (6) such that the height of the sealing space (7) is less than a thickness of the gasket (6) when the gasket (6) is not compressed.

11. The air filtering device (1) according to claim 10, wherein the height of the sealing space (7) is greater than a minimum allowed compressed thickness of the gasket (6).

12. The air filtering device (1) according to any of claims 9-11, wherein each of the first and second flanges (33, 34) is provided with a recessed portion (33A, 34A) and a non-recessed portion (33B, 34B), wherein the first and second flanges (33, 34) are arranged so that the two non-recessed portions (33B, 34B) form mating surfaces in contact with each other and so that the two recessed portions (33A, 34A) together form the sealing space (7).

## Patentansprüche

1. Luftfiltervorrichtung (1), umfassend:
ein Vorrichtungsgehäuse (2), das mit einem Lufteinlass (3) und einem Luftauslass (4) versehen ist, sodass Luft während eines Betriebs der Luftfiltervorrichtung (1) von dem Einlass (3) durch das Vorrichtungsgehäuse (2) und weiter zu dem Auslass (4) strömt;
wobei das Vorrichtungsgehäuse (2) mindestens ein erstes und ein zweites Gehäusemodul (13, 14) umfasst, die nebeneinander angeordnet sind, sodass Luft während des Betriebs der Vorrichtung (1) durch das erste Gehäusemodul (13) strömt, bevor sie durch das zweite Gehäusemodul (14) strömt,
wobei mindestens eines des ersten und des zweiten Gehäusemoduls (13, 14) dazu konfiguriert ist, mit einem Luftfilter (23, 24) versehen zu sein,
wobei das erste und das zweite Gehäusemodul (13, 14) über einen ersten Flansch (33) und einen zweiten Flansch (34) verbunden sind,
wobei der erste Flansch (33) auf dem ersten Gehäusemodul (13) und dem zweiten Gehäusemodul (14) zugewandt angeordnet ist,
wobei der zweite Flansch (34) auf dem zweiten Gehäusemodul (34) und dem ersten Gehäusemodul (13) zugewandt angeordnet ist,
wobei eine zusammendrückbare Dichtung (6) zwischen dem ersten und dem zweiten Flansch (13, 14) angeordnet ist,
wobei die Luftfiltervorrichtung (1) ferner eine Verriegelungsanordnung (50, 51, 52, 53, 54, 61, 62) umfasst, die dazu konfiguriert ist, das erste und das zweite Gehäusemodul (13, 14) miteinander zu verriegeln und den ersten und den zweiten Flansch (33, 34) aufeinander zu zu zwingen, um die Dichtung (6) zusammenzudrücken und eine angemessene Abdichtung zu bilden, wenn das erste und das zweite Gehäusemodul (13, 14) miteinander verriegelt sind,
**dadurch gekennzeichnet,**
**dass** die Verriegelungsanordnung einen Bügel (50) umfasst, der mittels mindestens einer ersten Schraube (51) mit sowohl dem ersten als auch dem zweiten Gehäusemodul (13, 14) verbunden ist, wobei ein erstes Gewindeschraubloch (53) zum Aufnehmen der ersten Schraube (51) in dem ersten oder dem zweiten Gehäusemodul (13) angeordnet ist,
wobei das erste Gewindeschraubloch (53) von einer Außenseite der Luftfiltervorrichtung (1) zugänglich ist und sich in eine Richtung erstreckt, die im Wesentlichen parallel zu einer Ebene ist, auf der sich der erste oder der zweite Flansch (33, 34) befindet,
wobei eine erste konische Führungsfläche (61) um das erste Schraubloch (53) angeordnet ist und wobei die erste Schraube (51) mit einer entsprechenden zweiten konischen Führungsfläche (62) versehen ist, sodass, wenn die erste Schraube (51) an das erste Schraubloch (53) befestigt und darin angezogen wird, die erste und die zweite konische Führungsfläche (61, 62) zusammenwirken und das erste und das zweite Gehäusemodul (13, 14) und somit ebenfalls den ersten und den zweiten Flansch (33, 34) aufeinander zu zwingen,
wobei der Bügel (50) mit einer Öffnung versehen ist, um es einem Gewindeteil der ersten Schraube (51) zu ermöglichen, hindurchzugehen und wobei die erste konische Führungsfläche (61) in dem Bügel (50) um die Öffnung herum angeordnet ist.

2. Luftfiltervorrichtung (1) nach Anspruch 1, wobei das erste Gewindeschraubloch (53) ein internes Gewindeelement umfasst, das auf einer Innenseite des ersten oder des zweiten Gehäusemoduls (13, 14) angeordnet ist.

3. Luftfiltervorrichtung nach Anspruch 1 oder 2, wobei der Bügel (50) mittels der ersten Schraube (51) und einer zweiten Schraube (52) mit dem ersten und dem zweiten Gehäusemodul (13, 14) verbunden ist,
wobei das erste Gewindeschraubloch (53) zum Aufnehmen der ersten Schraube (51) in einem des ersten oder des zweiten Gehäusemoduls (13) angeordnet ist,
wobei ein zweites Gewindeschraubloch (54) zum Aufnehmen der zweiten Schraube (52) in dem anderen des ersten oder des zweiten Gehäusemodul (14) angeordnet ist.

4. Luftfiltervorrichtung (1) nach einem der Ansprüche 1-3, wobei der Bügel (50) mit einem Scharnierpassteil (55) zum Halten einer Tür (8) des Gehäusemoduls (13, 14) versehen ist.

5. Luftfiltervorrichtung (1) nach einem der vorhergehenden Ansprüche, wobei jedes des ersten und des zweiten Gehäusemoduls (13, 14) einen im Allgemeinen rechteckigen Querschnitt mit vier Seitenwänden (8, 9) und vier Ecken (10) hat.

6. Luftfiltervorrichtung (1) nach Anspruch 5, wobei die Ecken (10) abgekantet sind, um Eckflächen (10A) aufzuweisen, die in eine Richtung zwischen jener benachbarter Gehäusemodulwände (8, 9) gewandt sind.

7. Luftfiltervorrichtung (1) nach Anspruch 5 oder 6, wobei die Verriegelungsanordnung vier Bügel (50) umfasst, die einer entsprechenden Ecke (10) zugeordnet angeordnet sind.

8. Luftfiltervorrichtung (1) nach Anspruch 6, wobei der Bügel (50) auf einer der Eckflächen (10A) angeordnet ist.

9. Luftfiltervorrichtung (1) nach einem der vorhergehenden Ansprüche,
wobei mindestens einer des ersten und des zweiten Flansches (33, 34) mit einem vertieften Abschnitt (33A, 34A) und einem nicht vertieften Abschnitt (33B, 34B) versehen ist, von denen sich jeder entlang des mindestens einen Flansches (33, 34) erstreckt,
wobei, wenn das erste und das zweite Gehäusemodul (13, 14) miteinander verriegelt sind, eine Oberfläche des nicht vertieften Abschnitts (33B) mit einer zusammenpassenden Oberfläche des anderen Flansches (34B) in Kontakt steht, während der vertiefte Abschnitt (33A, 34A) mindestens einen Teil eines Abdichtungsraums (7) bildet, der sich entlang des ersten und des zweiten Flansches (33, 34) und zwischen diesen erstreckt,
wobei die Dichtung (6) in dem Abdichtungsraum (7) angeordnet ist und zwischen einer Oberfläche des vertieften Abschnitts (33A) und einer Oberfläche des anderen Flansches (34A) auf einer gegenüberliegenden Seite des Abdichtungsraums (7) zusammengedrückt wird, wenn das erste und das zweite Gehäusemodul (13, 14) miteinander verriegelt sind.

10. Luftfiltervorrichtung (1) nach Anspruch 9, wobei der Abdichtungsraum (7) eine Höhe hat, die einem Abstand zwischen einer Oberfläche des vertieften Abschnitts (33A) und einer Oberfläche des anderen Flansches (34A) auf einer gegenüberliegenden Seite des Abdichtungsraums (7) entspricht, wobei sich die Höhe des Abdichtungsraums (7) derart auf eine Dicke der Dichtung (6) bezieht, dass die Höhe des Abdichtungsraums (7) kleiner als eine Dicke der Dichtung (6) ist, wenn die Dichtung (6) nicht zusammengedrückt wird.

11. Luftfiltervorrichtung (1) nach Anspruch 10, wobei die Höhe des Abdichtungsraums (7) größer als eine minimal zulässige zusammengedrückte Dicke der Dichtung (6) ist.

12. Luftfiltervorrichtung (1) nach einem der Ansprüche 9-11, wobei jeder des ersten und des zweiten Flansches (33, 34) mit einem vertieften Abschnitt (33A, 34A) und einem nicht vertieften Abschnitt (33B, 34B) versehen ist, wobei der erste und der zweite Flansch (33, 34) derart angeordnet sind, dass die zwei nicht vertieften Abschnitte (33B, 34B) zusammenpassende Oberflächen in Kontakt miteinander bilden und dass die zwei vertieften Abschnitte (33A, 34A) zusammen den Abdichtungsraum (7) bilden.

## Revendications

1. Dispositif de filtration d'air (1) comprenant :
un boîtier de dispositif (2) pourvu d'une entrée d'air (3) et d'une sortie d'air (4) de sorte que l'air circule depuis l'entrée (3) à travers le boîtier de dispositif (2) et plus loin vers la sortie (4) pendant le fonctionnement du dispositif de filtration d'air (1) ;
dans lequel le boîtier de dispositif (2) comprend au moins un premier et un deuxième module de boîtier (13, 14) disposés l'un à côté de l'autre de sorte que l'air circule à travers le premier module de boîtier (13) avant de circuler à travers le deuxième module de boîtier (14) pendant le fonctionnement du dispositif (1),
dans lequel au moins l'un des premier et deuxième modules de boîtier (13, 14) est configuré pour être pourvu d'un filtre à air (23, 24),
dans lequel les premier et deuxième modules de boîtier (13, 14) sont reliés par une première bride (33) et une deuxième bride (34),
dans lequel la première bride (33) est disposée sur le premier module de boîtier (13) et fait face au deuxième module de boîtier (14),
dans lequel la deuxième bride (34) est disposée sur le deuxième module de boîtier (34) et fait face au premier module de boîtier (13),
dans lequel un joint compressible (6) est disposé entre les première et deuxième brides (13, 14),
dans lequel le dispositif de filtration d'air (1) comprend en outre un agencement de verrouillage (50, 51, 52, 53, 54, 61, 62) configuré pour verrouiller les premier et deuxième modules de boîtier (13, 14) et de forcer les première et deuxième brides (33, 34) l'une vers l'autre de manière à comprimer le joint (6) et à former une étanchéité appropriée lorsque les premier et deuxième modules de boîtier (13, 14) sont emboîtés,
**caractérisé en**
**ce que** l'agencement de verrouillage comprend un support (50) qui est relié à la fois aux premier et deuxième modules de boîtier (13, 14) au moyen d'au moins une première vis (51),
dans lequel un premier trou de vis fileté (53) destiné à recevoir la première vis (51) est agencé dans le premier ou le deuxième module de boîtier (13),
dans lequel le premier trou de vis fileté (53) est accessible depuis l'extérieur du dispositif de filtration d'air (1) et s'étend dans une direction sensiblement parallèle à un plan dans lequel se trouve la première ou la deuxième bride (33, 34),
dans lequel une première surface de guidage conique (61) est disposée autour du premier trou de vis (53) et dans lequel la première vis (51) est pourvue d'une deuxième surface de guidage conique correspondante (62) de sorte que, lorsque la première vis (51) est fixée au premier trou de vis (53) et serrée dans celui-ci, les première et deuxième surfaces de guidage coniques (61, 62) interagissent et forcent les premier et deuxième modules de boîtier (13, 14), et donc également les première et deuxième brides (33, 34), l'une vers l'autre,
dans lequel le support (50) est pourvu d'une ouverture pour permettre le passage d'une partie filetée de la première vis (51), et dans lequel la première surface de guidage conique (61) est disposée dans le support (50) autour de l'ouverture.

2. Dispositif de filtration d'air (1) selon la revendication 1, dans lequel le premier trou de vis fileté (53) comprend un élément fileté intérieurement disposé à l'intérieur du premier ou du deuxième module de boîtier (13, 14).

3. Dispositif de filtration d'air selon la revendication 1 ou 2, dans lequel le support (50) est relié aux premier et deuxième modules de boîtier (13, 14) au moyen d'une première vis (51) et d'une deuxième vis (52).
dans lequel le premier trou de vis fileté (53) destiné à recevoir la première vis (51) est disposé dans l'un du premier ou du deuxième module de boîtier (13),
dans lequel un deuxième trou de vis fileté (54) destiné à recevoir la deuxième vis (52) est disposé dans l'autre du premier ou du deuxième module de boîtier (14).

4. Dispositif de filtration d'air (1) selon l'une quelconque des revendications 1 à 3, dans lequel le support (50) est pourvu d'un ensemble charnière (55) pour maintenir une porte (8) du module de boîtier (13, 14).

5. Dispositif de filtration d'air (1) selon l'une quelconque des revendications précédentes, dans lequel chacun des premier et deuxième modules de boîtier (13, 14) présente une section transversale généralement rectangulaire avec quatre parois latérales (8, 9) et quatre coins (10).

6. Dispositif de filtration d'air (1) selon la revendication 5, dans lequel les coins (10) sont chanfreinés de manière à présenter des surfaces de coin (10A) orientées dans une direction comprise entre celle de parois adjacentes de module de boîtier (8, 9).

7. Dispositif de filtration d'air (1) selon la revendication 5 ou 6, dans lequel l'agencement de verrouillage comprend quatre supports (50) disposés en association avec un coin correspondant (10).

8. Dispositif de filtration d'air (1) selon la revendication 6, dans lequel le support (50) est disposé sur l'une desdites surfaces de coin (10A).

9. Dispositif de filtration d'air (1) selon l'une quelconque des revendications précédentes,
dans lequel au moins l'une des première et deuxième brides (33, 34) est pourvue d'une partie évidée (33A, 34A) et d'une partie non évidée (33B, 34B), chacune s'étendant le long de l'au moins une bride (33, 34),
dans lequel, lorsque les premier et deuxième modules de boîtier (13, 14) sont emboîtés, une surface de la partie non évidée (33B) est en contact avec une surface d'accouplement de l'autre bride (34B) tandis que la partie évidée (33A, 34A) forme au moins une partie d'un espace d'étanchéité (7) qui s'étend le long et entre les première et deuxième brides (33, 34),
dans lequel le joint (6) est disposé dans l'espace d'étanchéité (7) et est comprimé entre une surface de la partie évidée (33A) et une surface de l'autre bride (34A) sur un côté opposé de l'espace d'étanchéité (7) lorsque les premier et deuxième modules de boîtier (13, 14) sont emboîtés.

10. Dispositif de filtration d'air (1) selon la revendication 9, dans lequel l'espace d'étanchéité (7) a une hauteur correspondant à une distance entre une surface de la partie évidée (33A) et une surface de l'autre bride (34A) sur un côté opposé de l'espace d'étanchéité (7), dans lequel la hauteur de l'espace d'étanchéité (7) est liée à une épaisseur du joint (6) de telle sorte que la hauteur de l'espace d'étanchéité (7) est inférieure à une épaisseur du joint (6) lorsque le joint (6) n'est pas comprimé.

11. Dispositif de filtration d'air (1) selon la revendication 10, dans lequel la hauteur de l'espace d'étanchéité (7) est supérieure à une épaisseur comprimée minimale autorisée du joint (6).

12. Dispositif de filtration d'air (1) selon l'une quelconque des revendications 9 à 11, dans lequel chacune des première et deuxième brides (33, 34) est pourvue d'une partie évidée (33A, 34A) et d'une partie non évidée (33B, 34B), dans lequel les première et deuxième brides (33, 34) sont disposées de sorte que les deux parties non évidées (33B, 34B) forment des surfaces d'accouplement en contact l'une avec l'autre et de sorte que les deux parties évidées (33A, 34A) forment ensemble l'espace d'étanchéité (7).
